# FASCICULE DE BREVET EUROPEEN

(11) **EP 1 211 041 B1**
(45) Date de publication et mention de la délivrance du brevet: **12.01.2005**
(21) Numéro de dépôt: 01420228.7
(22) Date de dépôt: 27.11.2001
(51) Int. Cl.: B29C 45/27

(54) **Bloc de distribution pour dispositif de moulage par injection**
Verteilerblock für Spritzgiessvorrichtung
Distribution manifold for injection moulding apparatus

(30) Priorité: 27.11.2000 FR 0015298
(43) Date de publication de la demande: 05.06.2002
(73) Titulaire: Berrod SA, 39260 Meussia (FR)
(72) Inventeur: Azzolin, Jean-François, Sièges, 39360 Viry (FR); Descours, Lionel, 01100 Oyonnax (FR)
(74) Mandataire: Maureau, Philippe

(56) Documents cités:
- EP-A- 0 710 535
- WO-A-96/38284
- DE-B- 1 230 200
- DE-B- 2 145 266
- DE-U- 9 310 529
- US-A- 5 032 078
- US-A- 5 427 519
- KREHWINKEL T ET AL: "KALTKANALTECHNIK - PRO UND CONTRA [1]" KAUTSCHUK UND GUMMI - KUNSTSTOFFE, DR. ALFRED HUTHIG VERLAG GMBH. HEIDELBERG, DE, vol. 49, no. 9, septembre 1996 (1996-09), pages 607-612, XP000630935 ISSN: 0948-3276
- PATENT ABSTRACTS OF JAPAN vol. 1996, no. 8, 30 août 1996 (1996-08-30) -& JP 08 090601 A (MITSUBISHI MATERIALS CORP), 9 avril 1996 (1996-04-09)
- PATENT ABSTRACTS OF JAPAN vol. 1995, no. 2, 31 mars 1995 (1995-03-31) -& JP 06 328509 A (TOYOTA MOTOR CORP), 29 novembre 1994 (1994-11-29)

## Description

La présente invention concerne un bloc de distribution de matière thermodurcissable ou composite thermodurcissable à mouler.

Dans un dispositif de moulage par injection, la matière à injecter est amenée dans un état liquide, par une presse dans un moule. Dans ce moule, la matière passe d'un état liquide à un état solide.

Dans le cas de moulage de matériau polymère thermodurcissable ou composite thermodurcissable, la matière est acheminée par la presse à une température permettant de maintenir celle-ci dans une phase non polymérisée. Cette température se situe dans une plage pouvant aller de 20°C à 60°C.

En revanche, le moule, dans lequel la matière est introduite, est chauffé et se trouve à une température assurant la polymérisation de la matière. Cette température se situe à environ 160°C.

On conçoit aisément que ce différentiel de température pose des problèmes considérables de gestion des dilatations entre les différents éléments.

Le document US 5 427 519 décrit un bloc de répartition de matière thermodurcissable. Ce bloc de répartition est bridé sur le moule par des vis.

Le différentiel de dilatation entre le distributeur qui est refroidi et le moule qui est réchauffé est absorbé par un élément élastique de type rondelle Belleville.

Les blocs de répartition de ce type présentent des inconvénients majeurs. Notamment, les éléments statiques de type rondelles Belleville qui s'avèrent très insuffisants.

En outre, le bridage du bloc sur le moule peut présenter à l'usage des défauts conduisant à des fuites de matériaux qui polymérisent alors en amont du moule, bloquant l'acheminement de la matière à injecter. Il faut alors procéder à un démontage extrêmement long et fastidieux du bloc.

L'invention vise à remédier à ces inconvénients.

Un but de la présente invention est de fournir un bloc de distribution pour dispositif de moulage de matériau thermodurcissable ou composite thermodurcissable permettant de gérer le problème de dilatation entre un moule chauffé et un bloc refroidi.

De manière connue en soi, ce bloc distributeur pour dispositif de moulage par injection de matière thermodurcissable ou composite thermodurcissable, est situé entre des moyens d'injection et un moule dans lequel la matière est injectée et comprend un corps sur lequel sont fixées au moins trois têtes d'injection présentant un canal d'injection, chaque tête d'injection comprenant un noyau dans lequel est aménagé un canal de refroidissement.

Selon l'invention, les parties latérales du corps du bloc sont munies, sur chacune de leurs faces tournées vers l'intérieur du bloc, d'ergots complémentaires de tiges de centrage du bloc par rapport au moule.

Grâce aux ergots coopérant avec les tiges de centrage fixées sur le moule, le bloc est parfaitement positionné dans le plan transversal à la direction d'écoulement de la matière à mouler. En outre le bloc peut aisément et rapidement être retiré du moule, ce qui est un avantage important dans un contexte industriel.

Avantageusement, des disques de réglage interchangeables destinés à venir en appui contre les moyens d'injection sont disposés sur la face du corps orienté du côté des moyens d'injection

Ces disques de réglage permettent d'ajuster le positionnement du bloc dans l'axe d'écoulement de la matière à mouler pour que lorsque la température de fonctionnement est atteinte, le bloc soit en appui contre le moule.

De manière avantageuse, les disques des réglage sont situés dans l'axe longitudinal des noyaux.

Les noyaux et les disques de réglage sont respectivement en contact du moule et des moyens d'injection. Leur coaxialité permet de réaliser une très bonne étanchéité du bloc de distribution. En effet, la charge qu'exercent les moyens d'injection est transmisse à travers le bloc jusqu'aux noyaux c'est à dire à l'emplacement exact où l'étanchéité avec le moule doit être réalisée.

De préférence, le noyau est prolongé d'une buse d'injection, un fourreau d'étanchéité entourant le noyau.

Avantageusement, la buse d'injection comprend un cône convergent dans le sens d'écoulement de la matière suivi d'une partie cylindrique.

Dans le cas où la matière se trouve dans un état transitoire, entre l'état liquide et l'état solide et forme un bouchon à l'extrémité de la buse, ce bouchon peut être aisément démouler avec la carotte de démoulage.

De préférence, le canal de refroidissement est un canal hélicoïdal s'enroulant autour du canal de refroidissement.

De manière préférentielle, le corps du bloc de distribution présente une forme de H comprenant une partie centrale et deux parties latérales, les quatre extrémités des parties latérales recevant chacune une tête d'injection.

De manière avantageuse, le noyau présente un épaulement sur lequel vient en appui un épaulement du fourreau d'étanchéité, ces deux épaulements étant traversés par au moins une vis de fixation.

La fixation, par vis, des têtes d'injection permet, d'une part, une fixation totalement étanche de la tête d'injection sur le corps du bloc, et d'autre part, permet un démontage rapide de celles-ci en cas de polymérisation non maîtrisée dans la tête d'injection.

Avantageusement, la portion du canal d'injection située dans la longueur de la partie centrale du bloc, présente un diamètre D1 et la portion du canal d'injection située dans chacune des parties latérales, présente un diamètre D2, le rapport entre le diamètre D1 et le diamètre D2 étant compris entre 1,0 et 1,5.

Le rapport des diamètres des différentes portions du canal d'alimentation du bloc permet d'obtenir un excellent équilibrage hydraulique du bloc.

De manière avantageuse, les éléments d'obturation, bouchant des perçages pratiqués dans le corps pour former le canal d'alimentation, présentent une extrémité ayant un profil rayonné.

Le profil rayonné des éléments d'obturation permet de réaliser des zones de raccordement des différentes portions du canal d'alimentation présentant une courbure constante sans arêtes vives, de ce fait minimisant les pertes de charge. De plus tout risque de stagnation de matière est évité.

Par ailleurs, les éléments d'obturation peuvent être extraits du bloc de distribution pour procéder au nettoyage des canaux.

L'invention sera bien comprise à l'aide du dessin schématique annexé, représentant, à titre d'exemple non limitatif, un bloc de distribution selon l'invention.
La figure 1 est une vue en perspective de ce bloc.
La figure 2 est une représentation schématique représentant un dispositif de moulage intermédiaire.
La figure 3 est une vue du bloc du côté de la presse d'injection.
La figure 4 est une vue en coupe selon IV-IV de la figure 3.
La figure 5 est une vue à une échelle agrandie de la buse d'injection.

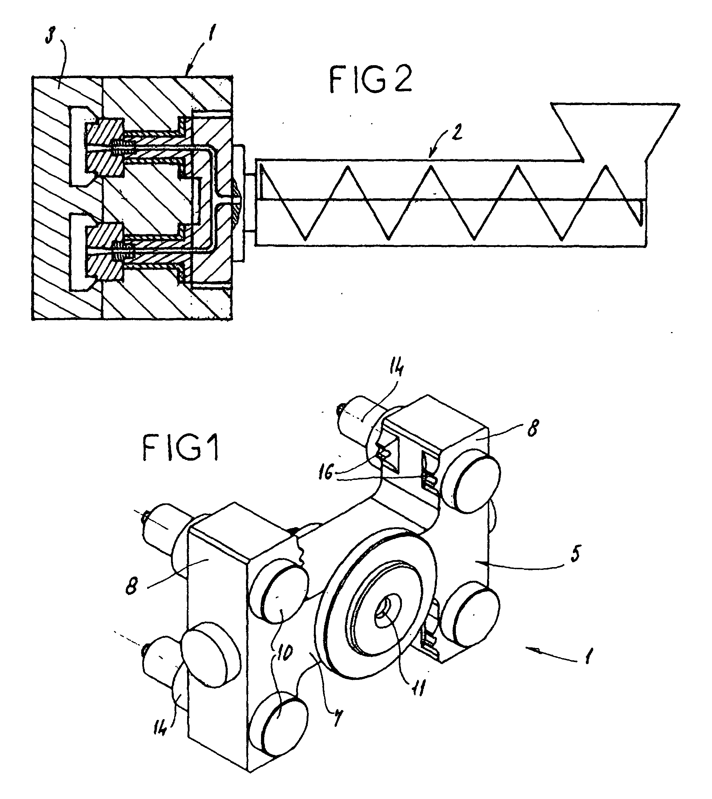

Comme cela apparaît sur la figure 1, le bloc de répartition 1 est situé entre une presse d'injection 2 et un moule 3 comprenant quatre empreintes.

Le bloc de distribution 1 comprend un corps 5 possédant une partie centrale 7 encadrée et deux parties latérales 8 formant un H.

Sur sa face tournée vers la presse, le bloc de distribution 1 comprend quatre disques 10 de réglage d'épaisseur, situés aux extrémités des éléments latéraux 8, et une ouverture 11 d'introduction du matériau fluide à mouler.

Sur sa face tournée vers le moule, le bloc de distribution comprend quatre têtes d'injection 14 correspondant aux quatre empreintes du moule. Les têtes d'injection sont situées aux extrémités des éléments latéraux 8 et sont chacune dans le même axe que chacun des disques 10.

Les éléments latéraux 8 comportent, sur chacune de leurs faces tournées vers l'intérieur du bloc, deux ergots 16 dont le fonctionnement apparaîtra plus loin. Chacun des ergots 16 comprend deux portions de cylindres situées chacune à proximité respectivement des faces du bloc tournées vers la presse et vers le moule servant de positionnement.

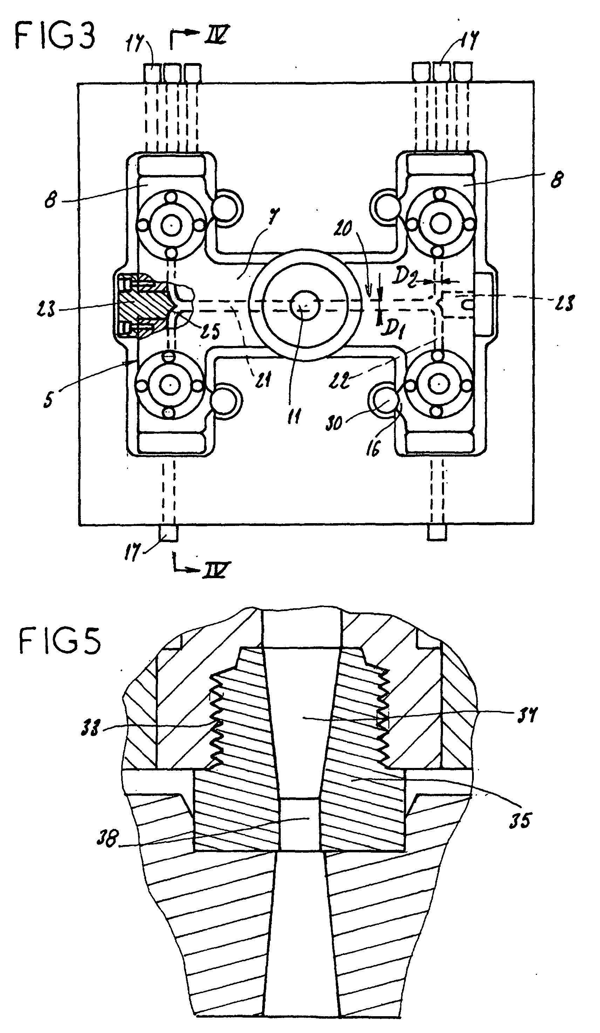

On a représenté sur la figure 3, les conduits 17 d'arrivée et d'évacuation du liquide de refroidissement du bloc de distribution. Par souci de clarté, les canaux de refroidissement, traversant le bloc, n'ont pas été représentés.

La figure 3 montre le canal 20 ménagé dans le bloc de distribution 1 pour acheminer la matière fluide dans les moules.

Le canal d'alimentation comprend plusieurs portions de diamètres différents : un canal central 21 de diamètre D1 ménagé dans l'élément central 7 formant le bloc de distribution. Ce canal central débouche dans deux canaux latéraux 22 de diamètre D2 ménagés dans chacun des éléments latéraux 8 formant le bloc de distribution. Le rapport des diamètres D1 et D2 est compris entre 1,0 et 1,5.

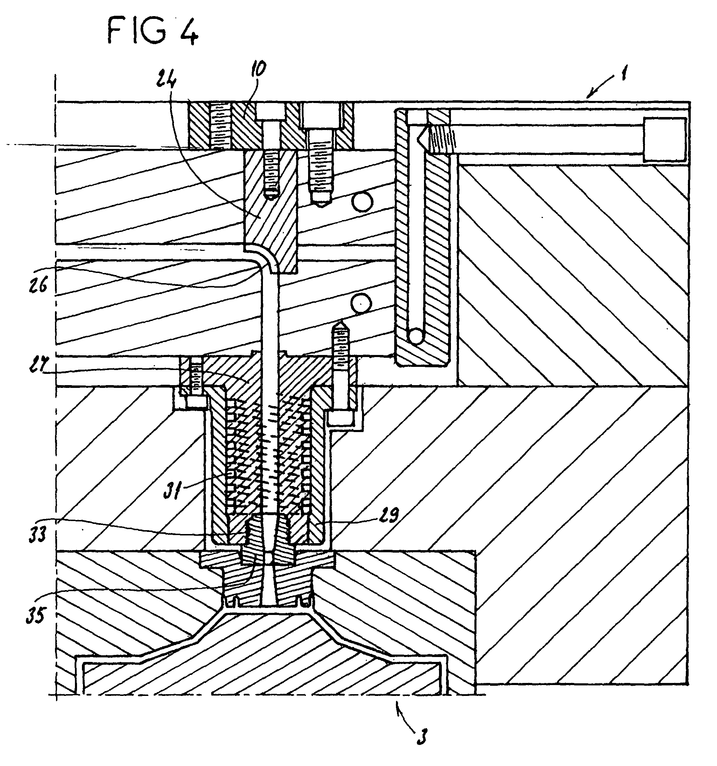

Comme on peut le voir sur les figures 3 et 4, les éléments d'obturation 23,24 des canaux présentent chacun un rayon 25,26, de telle sorte que, dans les zones de raccordement des différentes portions du canal d'alimentation dans le bloc, ce raccordement s'effectue suivant une courbure constante sans arêtes vives.

La figure 4 montre que chaque tête d'injection comprend un noyau 27 percé du canal d'alimentation 20 et un fourreau d'étanchéité 29. La surface du noyau comprend une rainure 31 hélicoïdale qui, lorsque le fourreau d'étanchéité est en place autour du noyau, ménage un conduit de refroidissement hélicoïdal autour du canal d'alimentation. L'extrémité du noyau est munie d'un filetage 33 qui reçoit une buse d'injection 35.

Le noyau présente un épaulement sur lequel vient en appui un épaulement du fourreau d'étanchéité, ces deux épaulements étant traversés, par au moins, une vis de fixation.

Comme cela apparaît sur la figure 5 qui montre à une échelle agrandie une vue en coupe de la buse 35, la buse 35 présente un cône 37, dans le sens d'écoulement de matière, convergent dans le sens d'écoulement de la matière et débouchant sur une partie cylindrique 38.

Le bloc de distribution 1 est mis en place au sein d'un ensemble d'injection, entre une presse 2 amenant la matière thermodurcissable ou composite thermodurcissable à une température d'environ 30°C et le moule 3 chauffé à une température d'environ 160°C.

Quatre tiges 30 solidaires du moule permettent de positionner le bloc de distribution par rapport au moule 3.

Chacune de ces tiges 30 vient se positionner contre les ergots 16 assurant ainsi la mise en place aisée du bloc de distribution 1 par rapport au moule 3 dans la direction transversale à l'axe de l'écoulement de la matière.

Dans l'axe longitudinal de l'écoulement de matière, le positionnement est assuré par les disques 10 de réglage d'épaisseur, les disques 10 assurent de plus la répartition de la pression de serrage exercé sur le bloc de distribution, ce qui contribue à une bonne étanchéité entre la presse et les empreintes du moule.

Le matériau fluide est introduit dans le bloc froid et chemine dans le canal d'alimentation 20 pour parvenir aux buses d'injection.

Le rapport des diamètres, entre la portion du canal 21 et la portion du canal 22 conduisant aux buses d'injection, permet un excellent équilibrage hydraulique du bloc de distribution et permet de minimiser les pertes de charges.

La configuration des têtes d'injection 14 permet de conserver la matière dans un état non polymérisé et ce au plus proche du moule 3 qui est à une température de polymérisation.

Ce résultat est réalisé, d'une part, par le conduit de refroidissement hélicoïdal 31 entourant le canal d'alimentation et, d'autre part, par la configuration des buses 35 qui présente un cône convergent, permettant de réduire la taille de la carotte, suivi d'une partie cylindrique. Cette partie cylindrique prolongeant le cône, permet que, dans le cas où la matière se trouve dans un état transitoire entre liquide et solide formant un bouchon au niveau de l'extrémité de la buse, ce bouchon peut être expulsé facilement du fait des parois parallèles de la partie cylindrique 38.

L'invention fournit ainsi un bloc de distribution pour ensemble de moulage de matériau thermodurcissable ou composite thermodurcissable, puisqu'il permet d'injecter la matière à moule au plus près du moule.

Il va de soi que l'invention n'est pas limitée à la forme de réalisation décrite ci-dessus à titre d'exemple, mais qu'elle en embrasse, au contraire, toutes les variantes de réalisation comme définies dans les revendications. Par exemple, le canal de refroidissement (31) pourrait prendre la forme de puits traversant le noyau (27).

## Revendications

1. Bloc de distribution pour dispositif de moulage par injection de matière thermodurcissable ou composite thermodurcissable, situé entre des moyens d'injection (2) et un moule (3) dans lequel la matière est injectée, comprenant un corps (5) sur lequel sont fixées au moins trois têtes d'injection (14) présentant un canal d'injection (20), chaque tête d'injection comprenant un noyau (27) dans lequel est aménagé un canal de refroidissement (31), **caractérisé en ce que** les parties latérales du corps (5) du bloc sont munies, sur chacune de leurs faces tournées vers l'intérieur du bloc, d'ergots (16) complémentaires de tiges (30) de centrage du bloc par rapport au moule.

2. Bloc de distribution selon la revendication 1, **caractérisé en ce que** des disques de réglage (10) interchangeables destinés à venir en appui contre les moyens d'injection (2) sont disposés sur la face du corps (5) orientée du côté des moyens d'injection.

3. Bloc de distribution selon la revendication 2, **caractérisé en ce que** les disques des réglage (10) sont situés dans l'axe longitudinal du noyau (27).

4. Bloc de distribution selon l'une des revendications 1 à 3, **caractérisé en ce que** le noyau (27) est prolongé d'une buse d'injection (35), un fourreau d'étanchéité (29) entourant le noyau (27).

5. Bloc de distribution selon la revendication 4, **caractérisé en ce que** la buse d'injection comprend un cône convergent (37) dans le sens d'écoulement de la matière, suivi d'une partie cylindrique (38).

6. Bloc de distribution selon l'une des revendications 1 à 5, **caractérisé en ce que** le canal de refroidissement (31) est un canal hélicoïdal s'enroulant autour du canal de refroidissement (20).

7. Bloc de distribution selon l'une des revendications 1 à 6, **caractérisé en ce que** le corps (5) du bloc de distribution présente une forme de H comprenant une partie centrale (7) et deux parties latérales (8), les quatre extrémités des parties latérales (8) recevant chacune une tête d'injection (14).

8. Bloc de distribution selon l'une des revendications 1 à 7, **caractérisé en ce que** le noyau (27) présente un épaulement sur lequel vient en appui un épaulement du fourreau d'étanchéité, ces deux épaulements étant traversés par au moins une vis de fixation.

9. Bloc de distribution selon l'une des revendications 1 à 8, **caractérisé en ce que** la portion du canal d'injection située dans la longueur de la partie centrale du bloc, présente un diamètre D1 et la portion du canal d'injection située dans chacune des parties latérales, présente un diamètre D2, le rapport entre le diamètre D1 et le diamètre D2 étant compris entre 1,0 et 1,5.

10. Bloc de distribution selon l'une des revendications 1 à 9, **caractérisé en ce que** les éléments d'obturation (23,24), bouchant des perçages pratiqués dans le corps pour former le canal d'alimentation, présentent une extrémité ayant un profil rayonné (25,26).

## Patentansprüche

1. Verteilerblock für Formvorrichtung durch Einspritzen von wärmehärtendem Material oder wärmehärtendem Verbundwerkstoff, der sich zwischen Einspritzmitteln (2) und einer Form (3) befindet, in die das Material eingespritzt wird, umfassend einen Körper (5), auf dem mindestens drei Einspritzköpfe (14) befestigt sind, die einen Einspritzkanal (20) aufweisen, wobei jeder Einspritzkopf einen Kern (27) umfasst, in dem ein Kühlkanal (31) eingerichtet ist, **dadurch gekennzeichnet, dass** die seitlichen Teile des Körpers (5) des Blocks auf jeder seiner Seiten, die zum Inneren des Blocks gekehrt sind, mit Dornen (16) versehen sind, die zu Schäften (30) zum Zentrieren des Blocks zu der Form komplementär sind.

2. Verteilerblock nach Anspruch 1, **dadurch gekennzeichnet, dass** austauschbare Einstellscheiben (10), die dazu bestimmt sind, gegen die Einspritzmittel (2) zur Auflage zu kommen, auf der Seite des Körpers (5) angeordnet sind, die zu der Seite der Einspritzmittel gekehrt sind.

3. Verteilerblock nach Anspruch 2, **dadurch gekennzeichnet, dass** sich die Einstellscheiben (10) in der Längsachse des Kerns (27) befinden.

4. Verteilerblock nach einem der Ansprüche 1 bis 3, **dadurch gekennzeichnet, dass** der Kern (27) von einer Einspritzdüse (35) verlängert wird, wobei ein Abdichtmantel (29) den Kern (27) umgibt.

5. Verteilerblock nach Anspruch 4, **dadurch gekennzeichnet, dass** die Einspritzdüse einen konvergierenden Kegel (37) in die Materialabfließrichtung umfasst, auf den ein zylindrischer Teil (38) folgt.

6. Verteilerblock nach einem der Ansprüche 1 bis 5, **dadurch gekennzeichnet, dass** der Kühlkanal (31) ein Schraubenkanal ist, der sich um den Kühlkanal (20) wickelt.

7. Verteilerblock nach einem der Ansprüche 1 bis 6, **dadurch gekennzeichnet, dass** der Körper (5) des Verteilerblocks eine H-Form aufweist, die einen zentralen Teil (7) und zwei seitliche Teile (8) umfasst, wobei die vier Enden der seitlichen Teile (8) jedes einen Einspritzkopf (14) erhalten.

8. Verteilerblock nach einem der Ansprüche 1 bis 7, **dadurch gekennzeichnet, dass** der Kern (27) einen Ansatz aufweist, auf den sich ein Ansatz des Abdichtmantels stützt, wobei diese zwei Ansätze jeweils von mindestens einer Befestigungsschraube durchquert werden.

9. Verteilerblock nach einem der Ansprüche 1 bis 8, **dadurch gekennzeichnet, dass** der Teil des Einspritzkanals, der sich in der Länge des zentralen Teils des Blocks befindet, einen Durchmesser D1 aufweist, und dass der Abschnitt des Einspritzkanals, der sich in jedem der seitlichen Teile befindet, einen Durchmesser D2 aufweist, wobei das Verhältnis zwischen dem Durchmesser D1 und dem Durchmesser D2 zwischen 1,0 und 1,5 liegt.

10. Verteilerblock nach einem der Ansprüche 1 bis 9, **dadurch gekennzeichnet, dass** die Verschlusselemente (23, 24), die Bohrungen verschließen, die in dem Körper angelegt sind, um den Zuführkanal zu bilden, ein Ende aufweisen, das ein Strahlprofil (25, 26) hat.

## Claims

1. Distribution manifold for an apparatus for injection-moulding thermosetting or composite thermosetting material, situated between injection means (2) and a mould (3) into which the material is injected, comprising a body (5) to which are attached at least three injection heads (14) having an injection channel (20), each injection head comprising a core (27) containing a cooling channel (31), the said distribution manifold being **characterized in that** the lateral parts of the body (5) of the manifold are provided, on each of their faces turned towards the interior of the manifold, with mating projections (16) for rods (30) for centring the manifold relative to the mould.

2. Distribution manifold according to Claim 1, **characterized in that** interchangeable adjustment discs (10) designed to bear against the injection means (2) are placed on that face of the body (5) which is oriented towards the injection means.

3. Distribution manifold according to Claim 2, **characterized in that** the adjustment discs (10) are situated in the longitudinal axis of the core (27).

4. Distribution manifold according to one of Claims 1 to 3, **characterized in that** the core (27) is continued by an injection nozzle (35), while a sealing sheath (29) surrounds the core (27).

5. Distribution manifold according to Claim 4, **characterized in that** the injection nozzle comprises a cone (37) converging in the direction of flow of the material, followed by a cylindrical part (38).

6. Distribution manifold according to one of Claims 1 to 5, **characterized in that** the cooling channel (31) is a helical channel that winds around the injection channel (20).

7. Distribution manifold according to one of Claims 1 to 6, **characterized in that** the body (5) of the distribution manifold is in the shape of an H comprising a central part (7) and two lateral parts (8), the four ends of the lateral parts (8) each receiving one injection head (14).

8. Distribution manifold according to one of Claims 1 to 7, **characterized in that** the core (27) has a shoulder on which a shoulder of the sealing sheath bears, at least one fixing screw passing through each of these two shoulders.

9. Distribution manifold according to one of Claims 1 to 8, **characterized in that** that portion of the injection channel which is situated in the length of the central part of the manifold has a diameter D1 and that portion of the injection channel which is situated in each of the lateral parts has a diameter D2, the ratio of the diameter D1 to the diameter D2 being between 1.0 and 1.5.

10. Distribution manifold according to one of Claims 1 to 9, **characterized in that** the shut-off elements (23, 24) that close the drillings made in the body to form the feed channel have an end with a radiused profile (25, 26).
